# EUROPEAN PATENT SPECIFICATION

(11) **EP 4 754 851 B1**
(45) Date of publication and mention of the grant of the patent: **11.11.2026**
(21) Application number: 24749297.8
(22) Date of filing: 06.08.2024
(51) Int. Cl.: H02J 3/28, C25B 15/02, H02J 3/38

(54) **ELECTROLYSIS SYSTEM, ENERGY BALANCING SYSTEM, METHOD FOR BALANCING ELECTRICAL POWER IN AN ELECTRICAL NETWORK, COMPUTER PROGRAM, CONTROLLER AND AN ELECTRICAL ENERGY SOURCE**
ELEKTROLYSESYSTEM, ENERGIEAUSGLEICHSSYSTEM, VERFAHREN ZUM AUSGLEICH ELEKTRISCHER LEISTUNG IN EINEM ELEKTRISCHEN NETZWERK, COMPUTERPROGRAMM, STEUERGERÄT UND ELEKTRISCHE ENERGIEQUELLE
SYSTÈME D'ÉLECTROLYSE, SYSTÈME D'ÉQUILIBRAGE D'ÉNERGIE, PROCÉDÉ D'ÉQUILIBRAGE D'ÉNERGIE ÉLECTRIQUE DANS UN RÉSEAU ÉLECTRIQUE, PROGRAMME INFORMATIQUE, CONTRÔLEUR ET SOURCE D'ÉNERGIE ÉLECTRIQUE

(30) Priority: 23.08.2023 EP 23193026
(43) Date of publication of application: 10.06.2026
(73) Proprietor: Siemens Energy Global GmbH & Co. KG, 81739 München (DE)
(72) Inventor: CRACIUN, Bogdan, 91052 Erlangen (DE); RUNSER, Thibaut, 90478 Nürnberg (DE); SCHUMANN, Sven, 91452 Wilhermsdorf (DE); BARTMANN, Andreas, 91056 Erlangen (DE)
(86) International application number: PCT/EP2024/072272
(87) International publication number: WO 2025/040435

(56) References cited:
- CA-A1- 2 741 129
- CA-A1- 3 188 123
- US-A1- 2022 065 162

## Description

### Technical Field

The invention relates to an electrolysis system, an energy balancing system, a method for balancing electrical power in an electrical network, a computer program, a controller and an electrical energy source.

### Technological Background

One characteristic of the renewable energy is its nature of production which sometimes can be stochastic and unpredictable. Moreover, during short periods of time due to environmental conditions such as wind gusts or clouds, the production of electrical energy can suffer large variations which cannot be controlled by a main controller of a renewable electrical energy source. Currently, said variations may be lowered by means of a common power derating strategy or by means of pitch systems as in case of wind turbines. There are systems and even standards (e.g. maximum power point tracking) which are designed to flatten the variations of the production of electrical energy. However, a large amount of renewable energy sources still contributes to instabilities in electrical networks due to their stochastic und unpredictable character of electrical power production.

CA 2741129 A1 shows a power dispatch system for electrolytic production of hydrogen from wind power. CA 3188123 A1 shows a grid supporting electrolyzer and US 2022/0065162 A1 shows integrated power production and storage systems.

It is thus an object of the present invention to provide an enhanced energy balancing system to flatten the variations during the production of electrical energy.

### Summary of the invention

A solution is provided by the subject matter according to the independent claims. Advantageous additional embodiments of the invention are described by the dependent claims, the following description and the Figures.

The invention relates to an electrolysis system with the features of claim 1 for energy harvesting comprising a main power controller that is adapted to control an absorption of electrical power received via an electrical terminal and further comprising an electrolysis controller adapted to control a conversion of the electrical power into an energy carrier by means of an electrolysis process, wherein the main power controller and the electrolysis controller are connected via a communication network.

The electrolysis system is characterized in that the electrolysis controller is adapted to transmit an indicator value indicative of the electrolysis process being capable or not capable of converting any additional electrical power to the main power controller via the communication network.

In other words, the electrolysis process may be a chemical process of converting a chemical input by means of the electrical power into the energy carrier. The energy carrier may be hydrogen or a synthetic fuel. For instance, hydrogen may be produced by means of the electrolysis process from a chemical input, such as water. The electrolysis system may comprise a plurality of electrolysis processes that are connected in series and that optionally may respectively be activated or deactivated by the electrolysis controller.

The electrolysis controller may be adapted to determine or report that the electrolysis process may not be capable of absorbing any additional electrical power and be adapted to determine the indicator value signaling whether the electrolysis process may absorb any additional electrical power or not. The indicator value may be a software-based binary value, such as 0 and 1 or high and low, for instance. Thereby, the indicator value may signal to the respective controller whether additional electrical power may be converted into the energy carrier or not.

For instance, the indicator value may be indicative of the electrolysis system as a whole being capable of absorbing any (additional) electrical energy or not.

Additionally or alternatively, the indicator value may be indicative of the electrolysis process being capable of converting any (additional) electrical energy or not.

The electrolysis process may not be capable of absorbing or converting any additional electrical power due to internal processes of the electrolysis system and/or due to the electrolysis process already running on a maximum level and/or due to heat.

Alternatively, the electrolysis system may be not capable of absorbing any additional electrical power due to a full reservoir of the energy carrier and/or due to at least one empty reservoir of the chemical input. For instance, the electrolysis controller may be adapted to measure an amount of the chemical input and an amount of energy carrier being output by the electrolysis process. The electrolysis controller may be adapted to measure a level of the chemical input and the energy carrier in a respective reservoir and compare it with a respective safety threshold value.

The electrolysis controller may comprise or be a rectifier which may be adapted to output a direct current based on an electrical power input from the main power controller of the electrolysis system wherein the electrical power input may correspond to the electrical power received via the electrical terminal. For instance, the electrolysis controller may be adapted to output a direct current voltage that corresponds to the amount of electrical power received via the electrical terminal and/or the amount of the electrical power input from the main power controller. The electrolysis controller may be adapted to measure the electrical power input being fed to the electrolysis process.

Additionally or alternatively, the electrolysis controller may be adapted to activate and/or deactivate a respective electrolysis process from the plurality of electrolysis processes connected in series corresponding to the amount of electrical power input.

Additionally or alternatively, the electrolysis system may also comprise a combined controller comprising the main power controller and the electrolysis controller.

Alternatively, the electrolysis system may be a battery and the electrolysis process may be a charging process of the battery.

The communication network may be a wired, particularly an electrical or optical data connection, and/or a wireless data connection between the electrolysis controller and the main power controller. The communication network may also connect further controllers, such as a generator controller of an electrical energy source, particularly a renewable electrical energy source. Thus, absorbing electrical power by the electrolysis system may mean consuming electrical power and/or converting electrical power received from the renewable electrical energy source or from an electrical network via the electrical terminal into the energy carrier.

In the electrolysis system, the main power controller and the electrolysis controller may have different cycle times, which means that they may operate at a different frequency for reading input values and writing output values. This may cause deadtimes wherein both cycles do not overlap and a further instability to the electrical network as the control of absorption of electrical power by the main power controller and the conversion of electrical power by the electrolysis process are not aligned.

The indicator value may help to overcome the problem of the different cycle times of the main power and the electrolysis controller. The indicator value may signal to the main power controller and/or to a generator controller that the electrolysis system may not absorb any (additional) electrical power or may absorb (additional) electrical power. Based on the indicator value, the main power controller instead of the electrolysis controller may adjust the electrical power input being fed to the electrolysis process, thereby overwriting a command of the electrolysis controller. The electrolysis controller may continue working as a rectifier which produces the direct current for the electrolysis process corresponding to the electrical power input, such as a direct current voltage for instance.

The renewable electrical energy source may convert natural forces such as wind gusts or solar irradiation into electrical power that is fed to the electrical network in a network configuration or directly to the electrolysis system in an island configuration. The electrolysis system may be connected to the electrical network and/or to the renewable electrical energy source via the electrical terminal for harvesting electrical power or surplus electrical power produced by the renewable electrical energy source. The energy carrier may be converted into electrical power later, thereby providing storage of electrical energy that is produced by a renewable electric energy source. For instance, the hydrogen may be converted into electrical power by means of a fuel cell and/or be converted into methane and burned in a gas power station.

This provides the advantage that the electrolysis system converts a varying input of electrical power from the renewable electrical energy source and additionally from the electrical network connected to the renewable electrical energy source into the energy carrier for later use. Further, this allows to adjust the consumption of electrical power to unpredictable and stochastic changes of production of electrical power, thereby providing energy harvesting and additionally network stability.

Further, the presented solution provides the advantage to utilize an already existing hardware architecture which does not need to be changed, particularly as to cycle times of a plurality of controllers from different manufacturers in electrolysis systems and electrical energy sources. Thus, this does not incur any cost increase due to said software-based solution which may be integrated into an already existing hardware or electrical architecture. Thus, complexity of the controllers is not increased.

Further, an amount of calculation effort of different controllers may also be reduced as an agreed minimum cycle time to align the plurality of controllers is not necessary by using said software-based solution. An alignment of cycle times would end up of the different manufactures providing minimum cycle times which would increase an amount of calculation by the controllers which would increase the consumption of electrical power. Those disadvantages may be overcome by using said software-based solution.

According to the invention, the main power controller is adapted to adjust an electrical power input of the electrolysis process instead of the electrolysis controller at least partly to the electrical power absorbed via the electrical terminal if the indicator value is indicative of the electrolysis process being capable of converting any additional electrical power. In other words, the main power controller may be adapted to overwrite a command of the electrolysis controller if the indicator value is indicative of the electrolysis process being capable of absorbing any (additional) electrical power. For that, the main power controller may be adapted to adjust the conversion of electrical power into the energy carrier by the electrolysis process until the electrolysis controller transmits the indicator value indicative of the electrolysis process being not capable of converting any (additional) electrical power. Then the main power controller may cease to overwrite the commands of the electrolysis controller and/or the electrolysis controller resumes controlling the electrolysis process.

For instance, the electrolysis controller and/or the main power controller may be adapted to provide a direct current for the electrolysis process that corresponds to the electrical power absorbed via the electrical terminal or to the electrical power input, particularly when the indicator value is indicative of the electrolysis process being capable of absorbing any (additional) electrical power. The main power controller may also comprise a rectifier or the electrolysis controller continues to output a direct current which corresponds to the electrical power input fed by the main power controller.

The electrolysis controller may be adapted to calculate the indicator value based on an energy carrier output limit, such as a reservoir limit, and/or a limit of a reservoir of the chemical input to the electrolysis process. The energy carrier may be hydrogen and/or methane and the output limit may correspond to a security limit or be associated with a limit of a reservoir for storing the hydrogen and/or methane produced by the electrolysis process.

This provides the advantage that the variations of the electrical energy absorbed by the electrolysis process via the electrical terminal are aligned with the variations of the electrical power produced by the renewable electrical energy source that is absorbed via the electrical terminal such that the variations of produced electrical power that otherwise would destabilize an electrical network may be flattened. Thus, an equalized balance of electrical power to the electrical network may be provided and a surplus production of electrical power may be harvested for later use.

The invention also includes embodiments by which additional advantages are obtained.

In one embodiment, the electrolysis controller and/or the main power controller are adapted to adjust the conversion of electrical power into the energy carrier of the electrolysis process at least partly to a maximum level if the indicator value is indicative of the electrolysis system being capable of converting any additional electrical power. In other words, if the electrolysis controller sets the indicator value of being indicative of the electrolysis process being capable of converting any additional electrical power, the electrolysis controller may be adapted to set the electrical energy input of the electrolysis process to a maximum level, for instance a maximum temperature level and/or direct current voltage level and/or pressure level. The electrical power input to the electrolysis process may be fed directly by the main power controller instead of the electrolysis controller. The electrolysis controller may be adapted to set the electrolysis process or the electrical power input to the electrolysis process to said maximum level until it is determined by the electrolysis controller that the electrolysis process is not capable of absorbing any (additional) electrical power.

Additionally or alternatively, the electrolysis controller may be adapted to activate the plurality of electrolysis processes that are connected in series which are fed with electrical power directly by the main power controller instead of the electrolysis controller.

If the main power controller feds the electrolysis process with an electrical power input inferior to said maximum level, the electrolysis process may thereby absorb at least partly the electrical energy provided to the electrolysis system via the electrical terminal such that a variation of the absorbed electrical power may be aligned with the electrical power produced by the renewable electrical energy source.

This provides the advantage that a varying production of electrical power by a renewable electrical energy source may be flattened and network stability be improved.

In one embodiment, the indicator value comprises a tolerance parameter indicative of an amount of the additional electrical power the electrolysis process is capable of converting. In other words, the indicator value comprises a tolerance parameter indicative of an amount of the (additional) electrical power the electrolysis system is capable of absorbing. Additionally, the electrolysis controller may be adapted to compare a current direct current voltage value with a reference or maximum direct current threshold voltage value of the electrolysis process to determine the tolerance parameter. Additionally or alternatively, the electrolysis controller may be adapted to compare a level of a reservoir of the chemical input and/or energy carrier output with a maximum threshold value and/or a heat level and/or a pressure level of the electrolysis process to determine the tolerance parameter.

The electrolysis controller may be adapted to transmit a software-based variable to the power supply controller comprising an amount of (additional) electrical power and/or electrical energy the electrolysis system may be able to convert into the energy carrier.

The main power controller may be adapted to receive said tolerance parameter, particularly instead of the indicator value. Further, the main power controller may be adapted to receive the indicator value and the tolerance parameter and to compare the tolerance parameter with a threshold value. The main power controller may be adapted to adjust the absorption of electrical power received via the electrical terminal corresponding to the comparison of the tolerance parameter with the threshold value. For instance, if the current absorption of electrical power via the electrical terminal reaches a first threshold value, the main power supply controller may be adapted to reduce the absorption of electrical power and optionally sent the indicator value to a generator controller of a renewable electrical energy source indicative of slowing down or decreasing the production of electrical power.

This provides the advantage that the production and absorption of electrical power may be better forecasted which may further reduce a rate of change of frequency (ROCOF) of the electrical network the electrolysis system is connected to. In one embodiment, the main power controller is adapted to measure a reference value of an electrical network that is connected to the electrical terminal, particularly a network frequency and/or a network voltage, wherein optionally the main power controller is adapted to adjust the absorption of electrical power received via the electrical terminal based on the reference value, particularly if the indicator value is indicative of the electrolysis system being capable of converting any additional electrical power. In other words, the main power controller may be adapted to measure a network frequency and/or a network voltage at the electrical terminal of the electrolysis system and may further be adapted to increase or decrease the absorption of electrical power received via the electrical terminal.

This provides the advantage, that the electrolysis system may contribute to a network stability by flattening the variations of electrical power produced by the renewable electrical energy source.

Further, the electrolysis system is independent of whether the electrical network that the electrolysis system is connected to is an alternating current network or a direct current network.

It is further an object of the present invention to provide an energy balancing system with the features of claim 5 comprising said electrolysis system as described above and an electrical energy source, particularly a renewable electrical energy source, wherein the electrolysis system and the electrical energy source are electrically connected, optionally to or via an electrical network. In other words, the energy balancing system may comprise a renewable electrical energy source and the electrolysis system that are electrically connected in an island configuration or alternatively connected to or via an electrical network in a network configuration. In the island configuration, the entire electrical power produced by the renewable electrical energy source may be harvested by the electrolysis system whereas in the network operation configuration, sudden variations of production by the renewable electrical energy source, i.e. power ramps, may be harvested by the electrolysis system which improves network stability. The power ramps may be due to suddenly changing environmental conditions of the renewable electrical energy source such as sudden wind gusts or changing solar irradiation due to clouds. The renewable electrical energy source may be a wind turbine or a solar power unit or a combination of a plurality thereof. This provides the advantage that network stability may be improved and a loss of electrical energy due to network stability may be further reduced.

In one embodiment, a production of electrical power of the electrical energy source is controlled by a generator controller, wherein the generator controller is connected to the communication network, wherein the main power controller and/or the electrolysis controller of the electrolysis system is adapted to transmit the indicator value indicative of the electrolysis process being capable or not capable of converting any additional electrical power to the generator controller via the communication network. In other words, the generator controller may be a controller of a generator that is driven by a renewable energy power plant or be a controller of solar power unit adapted to control an output of electrical power. The generator controller may be adapted to decrease the production of electrical power by means of common power control or power derating algorithms if the indicator value is indicative of the electrolysis process being not capable of converting any (additional) electrical power.

Additionally or alternatively, the main power controller and/or the electrolysis controller may be adapted to measure a reference value of an electrical network such as a network frequency and/or network voltage. The electrolysis controller may be adapted to adjust the absorption of electrical power and/or an amount of conversion of electrical energy into an energy carrier with respect to the measured reference value. Further, the generator controller may be adapted to adjust the production of electrical power corresponding to the reference value. This provides the advantage that the electrolysis system may additionally serve as a buffer system for flattening the variations of electrical power produced by the renewable electrical energy source which improves network stability.

In one embodiment, the generator controller is adapted to reduce the production of electrical power of the electrical energy source, particularly be means of a breaking chopper and/or a crowbar circuit and/or a droop speed control if the indicator value is indicative of the electrolysis process being not capable of converting any additional electrical power. In other words, the generator controller may be adapted to decrease the production of electrical power by the renewable electrical energy source if the indicator value indicates that the electrolysis system is not capable of absorbing any (additional) electrical power whereas the power generator controller may be adapted not to decrease the production of electrical power if the indicator value indicates that the electrolysis system is capable of absorbing any (additional) electrical power.

Additionally or alternatively, the generator controller of a renewable electrical energy source may be adapted to receive the indicator value and/or the tolerance parameter value via the communication network and to adjust an amount of produced electrical power corresponding to the indicator value and/or corresponding to the tolerance parameter. As to the renewable electrical energy source, adjusting for the generator controller may mean decreasing the production of electrical power or not decreasing or slowing down the production of electrical power. For instance, the generator controller may be adapted to decrease the production of electrical power if the tolerance parameter reaches a first threshold value whereas the generator controller may be adapted not to decrease the production of electrical power if the tolerance parameter reaches a second threshold value.

This provides the advantage that network stability may be improved on the production side of electrical power wherein the electrolysis system may serve as a buffer system flattening the variations of electrical power produced by the renewable electrical energy source.

The invention further relates to a method with the features of claim 8 for balancing an electrical power in an electrical network that is electrically connected to an electrical energy source, particularly a renewable electrical energy source, and to an electrolysis system, wherein a production of electrical power by the electrical energy source is controlled by a generator controller and wherein an absorption of electrical power of the electrolysis system received from the electrical energy source, particularly via the electrical network, is controlled by a main power controller and wherein a conversion of electrical power into an energy carrier by an electrolysis process of the electrolysis system is controlled by an electrolysis controller, comprising the steps of:
- Determining by means of the electrolysis controller a capacity of the electrolysis process of converting any additional electrical power into the energy carrier and transmitting an indicator value indicative of whether the electrolysis process is capable or not capable of converting any additional electrical power to the main power controller of the electrolysis system via a communication network connecting the electrolysis controller and the main power controller;
- Adjusting by the main power controller an electrical power input of the electrolysis process instead of the electrolysis controller at least partly to the electrical power absorbed from the electrical energy source if the indicator value is indicative of the electrolysis process being capable of converting any additional electrical power.

In other words, the electrolysis controller may determine a limit of a reservoir storing the energy carrier, such as hydrogen, for determining whether the electrolysis process is capable or not capable of converting any (additional) electrical power. The electrolysis process being capable of converting any additional electrical power may mean that the reservoir storing the energy carrier may have additional storage capacity up to a threshold limit.

Additionally or alternatively, the electrolysis controller may determine that the electrolysis process is not capable of absorbing any (additional) electrical power if a voltage value reaches a voltage threshold and/or a temperature threshold value.

For instance, the indicator value may be a software-based binary value such as 1 indicating the electrolysis system being capable of converting any additional electrical power and 0 indicating the electrolysis system not being capable of converting any additional electrical power or vice-versa. Adjusting the electrical power input of the electrolysis process by the main power controller may be increasing or decreasing a voltage level or activating and deactivating at least one further electrolysis process of the electrolysis system running and/or connected in series with said electrolysis process. For instance, the electrolysis controller may activate or deactivate the respective electrolysis process from a plurality of electrolysis processes connected in series.

This provides the advantage that the electrolysis system may serve as a buffer system for providing network stability and for providing a harvesting electrical power that may be consumed later by conversion of the energy carrier into electrical power.

In one embodiment, the method comprises further the step of:
- Adjusting by means of the main power controller and/or the electrolysis controller the conversion of electrical power of the electrolysis process at least partly to a maximum level if the indicator value is indicative of the electrolysis process being capable of converting any additional electrical power.

In other words, the main power controller instead of the electrolysis controller may activate or deactivate a respective electrolysis process from a plurality of electrolysis processes connected in series. For instance, the main power controller may activate all electrolysis processes from the plurality of electrolysis process connected in series.

Additionally or alternatively, the main power controller and/or the electrolysis controller may set a command directed to the respective electrolysis process for producing a maximum amount of the energy carrier or to set a target value for producing the energy carrier of the respective electrolysis process to a (maximum) threshold value if the indicator value is indicative of the electrolysis process being capable of converting any (additional) electrical power.

This allows the electrolysis process to convert the electrical power that is directly received from the electrical terminal and/or via the main power controller such that the electrical power produced by the electrical energy source is converted by the electrolysis process into the energy carrier.

This provides the advantage that the electrolysis system may serve as a buffer system for flattening the varying production of electrical power by the renewable electrical energy source and for harvesting electrical power that may be consumed later by conversion of the energy carrier.

In one embodiment, the method comprises further the steps of:
- Transmitting by the main power controller and/or the electrolysis controller the indicator value to the generator controller via the communication network that is connecting the generator controller to the main power controller and/or to the electrolysis controller of the electrolysis system;
- Reducing by means of the generator controller the production of electrical power of the electrical energy source if the indicator value is indicative of the electrolysis process being not capable of converting any additional electrical power, particularly by means of a breaking chopper and/or a crowbar circuit and/or a droop speed control.

In other words, the generator controller receives the indicator value and adjust the production of electrical power based on said indicator value. The generator controller may increase the production of electrical power or not apply any measures to reduce the production of electrical power if the indicator value is indicative of the electrolysis process being capable of converting any (additional) electrical power.

Additionally or alternatively, the indicator value may comprise or may be a tolerance value indicative of an amount of (additional) electrical power the electrolysis process may be capable of converting. The generator controller may receive the tolerance value and adjust the production of electrical power based on the tolerance value. For instance, the generator controller may reduce the production of electrical power if the tolerance value reaches a first threshold value and/or not to reduce the production of electrical power if the tolerance parameter reaches a second threshold value.

This provides the advantage that power ramps of renewable electrical energy sources may be forecasted such that buffering electrical power is improved.

In one embodiment, the method comprises further the steps of:
- Measuring by means of the generator controller and/or the main power controller a reference value of the electrical network, particularly a network frequency and/or a network voltage;
- Comparing by the generator controller and/or the main power controller the reference value with a threshold value;
- Adjusting by the generator controller the production of electrical power of the electrical energy source and/or adjusting by the main power controller the absorption of electrical power of the electrolysis system with respect to the reference value, particularly if the indicator value is indicative of the electrolysis process being capable of converting any additional electrical power.

In other words, the main power controller and/or the electrolysis controller may adjust the amount of electrical power being converted into the energy carrier by the electrolysis process corresponding to the reference value.

Additionally or alternatively, the generator controller adjusts the production of electrical power based on the reference value and optionally based on the indicator value and/or the tolerance parameter from the main power controller and/or the electrolysis controller of the electrolysis system. For instance, if the reference value of the electrical network is above a reference network frequency or network voltage and further the indicator value and/or the tolerance parameter are indicative of the electrolysis process being capable of converting any (additional) electrical power, the generator controller may not reduce the production of electrical power. If the reference value of the electrical network is above a reference frequency or network voltage and further the indicator value and/or the tolerance parameter are indicative of the electrolysis process being not capable of converting any (additional) electrical power, the generator controller may reduce the production of electrical power.

Additionally or alternatively, the generator controller may not decrease the production of electrical power if the reference value is below a reference network frequency or network voltage and the indicator value and/or the tolerance parameter are indicative of the electrolysis system being not capable of converting any (additional) electrical power. This provides the advantage that power ramps of renewable electrical energy sources may be further buffered such that network stability is improved.

The invention further relates to a computer program with the features of claim 12 comprising instructions which, when the program is executed by a computer, particularly a generator controller and/or a main power controller and/or an electrolysis controller, cause the computer to carry out the steps of the method as described above. In other words, the indicator value may be a software-based binary variable indicating whether the electrolysis system is capable of converting any (additional) electrical power into the energy carrier or not which is transmitted between the controllers via the communication network. Further, said indicator value is independent of the cycle times of the respective controller. This provides the advantage that an existing hardware architecture does not need to be changed.

The invention further relates to a controller with the features of claim 13, particularly a generator controller and/or a main power controller and/or an electrolysis controller, comprising a computer-readable storage medium having stored thereon the computer program as described above.

In other words, the controller may be programmable logic controller (PLC). The controller may comprise at least one processor and a computer readable storage medium, wherein the computer readable storage medium comprises instructions which, when executed by the at least one processor, cause the controller to perform the steps of the method as described above. In other words, the at least one processor may be a microprocessor and/or a microcontroller and/or a FPGA (Field Programmable Gate Array and/or a DSP (Digital Signal Processor).

This provides the advantage that an existing hardware architecture does not need to be changed.

The invention further relates to an electrical energy source, particularly a renewable electrical energy source with the features of claim 14. In other words, the electrical energy source or the renewable energy source may be a wind turbine unit or a solar power unit, comprising the controller as described above.

The invention also relates to realizations comprising a combination of the features of several of the described embodiments.

### Brief description of the drawings

The present disclosure will be more readily appreciated by reference to the following detailed description when being considered in connection with the accompanying drawings in which:
Figure 1 shows an overview of network and controller data of an electrical network that is connected to a renewable electrical energy source and an electrolysis system without an energy balancing system,
Figure 2 shows a schematic overview of said energy balancing system comprising an electrolysis system;
Figure 3 shows the effects on the network and controller data of an alternating current network comprising said energy balancing system;
Figure 4 shows the effects on the network and controller data of a direct current network comprising said energy balancing system;
Figure 5 shows the effects on the network and controller data of a combination of the energy balancing system with a droop control; and
Figure 6 shows an overview of the method for balancing an electrical network as described above.

### Detailed description of preferred embodiments

In the following, the invention will be explained in more detail with reference to the accompanying figures. In the Figures, like elements are denoted by identical reference numerals and repeated description thereof may be omitted in order to avoid redundancies.

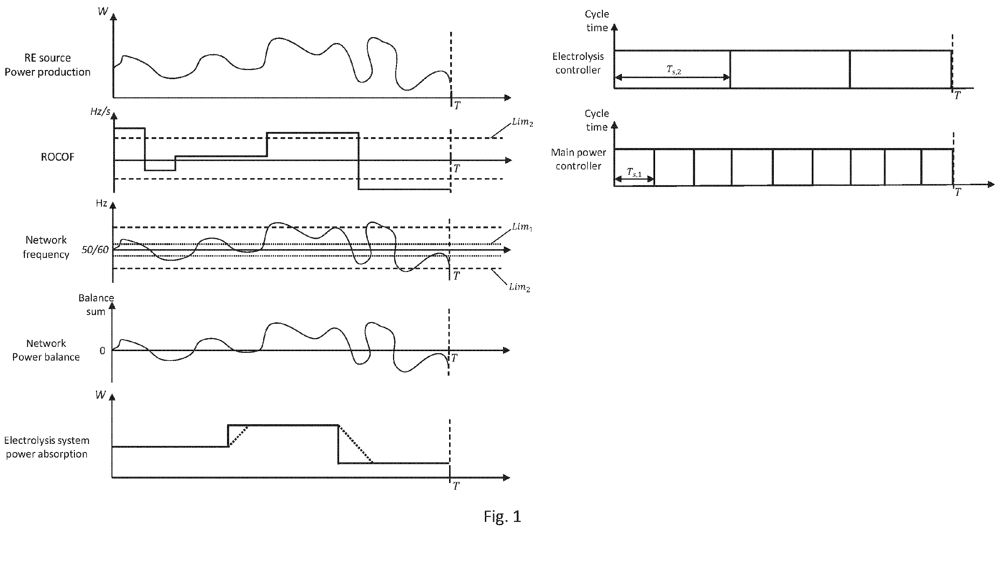

Figure 1 shows an example of a varying production of electrical power by a renewable electrical energy source (RE source) such as a wind turbine or as solar power unit while consumption of electrical power is remaining constant over an exemplary time interval T in the first chart on the left. This is due to unpredictable environmental conditions such as changing wind conditions or solar irradiation which cannot be controlled and are thus unpredictable and stochastic. This causes the production of electrical power to vary.

Said varying production of electrical power by the renewable electrical energy source is fed to an electrical network wherein electrical power must be consumed simultaneously for the network to remain stable.

In an alternating current network, the network frequency as well as the rate of change of frequency (ROCOF) may serve as an indicator for the balance and stability of the electrical network as depicted in the second and third chart on the left.

In an alternating current network, the network frequency may be an indicator of a power balance of the electrical network which must be equal to zero. The varying production of electrical power of the renewable electrical energy source causes the power balance of the electrical network to vary in the same manner as the power production of the renewable electrical energy source with other conditions such as additional consumption remaining unchanged. This further causes a power balance of the electrical network that varies in the same manner as the production of electrical power by the renewable electrical energy source as depicted in the fourth chart on the left. Said varying production of electrical power by the renewable electric energy source causes thus the network frequency to fluctuate in the same manner as the power production, for instance about the reference frequency of *50*/*60 Hz* while other may remain unchanged. This results in an increased rate of change of frequency over the exemplary time interval *T*.

However, the network frequency may vary within certain threshold intervals *Lim*₁ and *Lim*₂ which allow the electrical network to remain stable. For instance, *Lim*₁ may depict a deadband which may be a tolerance interval for the electrical network to remain stable without interfering. *Lim*₂ may be a maximum tolerance interval where network stability measures may need to be triggered, such as increasing production of electrical power or decreasing temporary loads of the network. Energy balancing measures may be triggered when variation the network frequency and/or the network voltage may be between the first limit *Lim*₁ and the second limit *Lim*₂.

The balance of the electrical network may be improved by buffering the electrical power produced by the renewable electrical energy source. For instance, this may be done by producing hydrogen by means of an electrolysis system which is fed with the electrical power produced by the renewable electrical energy source.

An absorption of electrical power over the time interval T by the electrolysis system is controlled by a main power controller and an electrolysis controller which adjust the electrical power absorbed by the electrolysis system to the electrical power produced by the renewable electrical energy source. The electrical power absorbed by the electrolysis system is adjusted by the main power controller and/or the electrolysis controller at least partly to the electrical power that is fed to the electrical network by the renewable electrical energy source.

However, the amount of electrical power converted by the electrolysis process remains constant and may be adapted slowly by the electrolysis controller as depicted in the fifth chart on the left of Figure 1. This is due to the cycle time *T*_{*s*,2} of the electrolysis controller which denotes a minimum calculation time of the electrolysis controller which is relatively slow. Further, the electrolysis process itself has some inertia which es denoted by the dotted lines in the fifth chart on the left of Figure 1. Hence, the electrolysis controller is too slow to adapt the conversion of electrical energy into an energy carrier such as hydrogen by the electrolysis process in order to remain in line with the varying production of electrical power by the renewable electrical energy source.

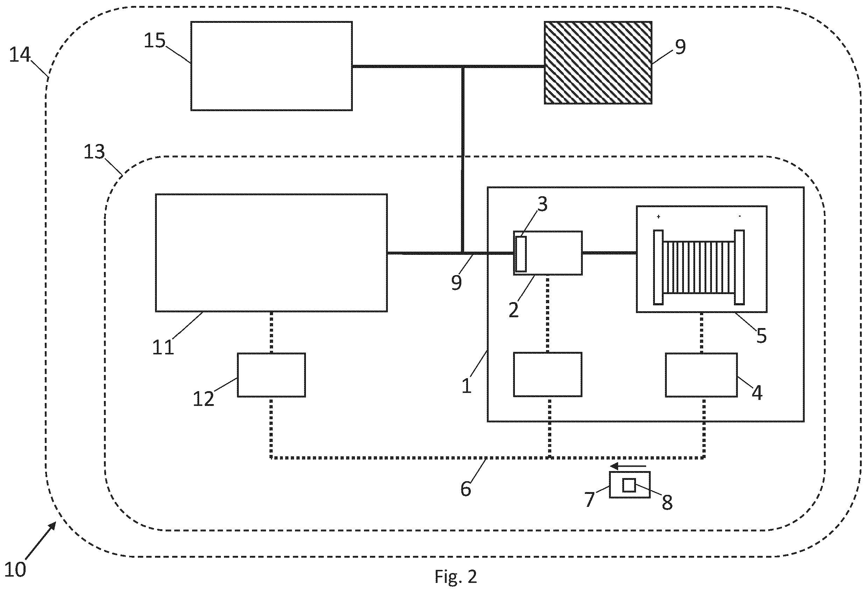

Further, the cycle time of the electrolysis controller *T*_{*s*,2} compared to the cycle time of the main power controller *T*_{*s*,1} is too slow to react to the changes of production of electrical power in time to keep the balance of the electrical network equal to zero. Further, the cycle times of the controller of the electrolysis system *T*_{*s*,2} and of the main power controller *T*_{*s*,1} are not aligned as depicted in the first and second chart on the right in Figure 1. Mostly, the cycle time *T*_{*s*,2} of the electrolysis controller is relatively longer than the cycle time *T*_{*s*,1} of main power controller or of a generator controller of the renewable electrical energy source which are more sensitive to power fluctuations. This misalignment of the controllers of the electrolysis system and the renewable electrical energy source does not allow an equalized balance of the electrical network and may cause deadtimes or further instabilities. Although an alignment of the cycle times *T*_{*s*,1} and *T*_{*s*,2} seems quite obvious, the controllers are often manufactured by different manufacturers wherein such an alignment of cycle times is not easily achievable or at the cost of a minimum common cycle time which results in an increased amount of calculation. This disadvantage is to be overcome by the present energy balancing system as depicted in Figure 2.

Figure 2 shows an energy balancing system 10 comprising a renewable electrical energy source 11 and an electrolysis system 1 which are electrically connected. The renewable electrical energy source 11 may be a wind turbine or a solar power unit. The electrolysis system 3 may comprise an electrical terminal 3 to provide an electrical connection to the renewable electrical energy source 11 and/or to an electrical network 9. The electrolysis system 1 may further comprise a main power controller 2 which is adapted to control an amount of electrical power that is absorbed by the electrolysis system 1 via the electrical terminal 3 wherein the electrolysis system 1 is further adapted to convert the electrical power received via the electrical terminal 3 into the energy carrier by means of the electrolysis process 5. The electrolysis process 5 may be an electrolysis module which optionally is adapted to be connected in series with other electrolysis modules. The conversion of electrical power into the energy carrier is controlled by the electrolysis controller 4 which comprises a rectifier to output a direct current for the electrolysis process 5. For instance, the electrolysis controller 4 is adapted to activate or deactivate a respective electrolysis process 5 from a plurality of electrolysis processes 5 that are connected in series.

Additionally or alternatively, the electrolysis controller 4 may be adapted to measure the amount of a chemical input, at least one voltage and an amount of the energy carrier for controlling the electrolysis process 5.

Additionally or alternatively, the electrolysis controller 4 may be adapted to output a direct current corresponding to the electrical power received via the electrical terminal 3. The renewable electrical energy source 11 and the electrolysis system 1 are directly connected via an electrical link or optionally via an electrical network 9 in an island configuration 11. Alternatively, the renewable electrical energy source 11 and the electrolysis system 1 are connected to the electrical network 9 in a network configuration 14 wherein the electrical network 9 may comprise further temporary electrical loads 15.

Additionally, the electrolysis controller 4 is adapted to determine a capability of the electrolysis system 5 to convert any (additional) electrical power. For instance, the electrolysis controller 4 is adapted to measure a limit of a reservoir of the chemical input and/or of the energy carrier and compare the respective limit with a respective threshold value to determine the indicator value 7.

Additionally or alternatively, the electrolysis controller 4 is adapted to determine an indicator value 7 being indicative of a capability of the electrolysis process 5 to convert any (additional) electrical power by means of comparing a current direct current voltage value with a threshold voltage value.

The main power controller 2 and the electrolysis controller 6 are connected with each other via the communication network 6 for an exchange of data. The communication network 6 may be electrical or optical. The electrolysis controller 4 is adapted to transmit an indicator value 7 to the main power controller 2 via the communication network 6 which indicates whether the electrolysis process 5 is capable of converting any (additional) electrical power or not. The indicator value 7 is a software-based value that is exchanged via the communication network 6 between the main power controller 2 and the electrolysis controller 4 and optionally with the generator controller 12 that is connected to the communication network 6.

If the indicator value 7 is indicative of the electrolysis process 5 being capable of converting (additional) electrical power, the main power controller 2 is adapted to overwrite a command of the electrolysis controller 4 for controlling the electrolysis process 5. The main power controller 2 is further adapted to adjust the conversion of electrical power into the energy carrier by the electrolysis process 5 corresponding to the electrical power received via the electrical terminal 3. The electrolysis controller 4 may continue working as a rectifier which outputs a direct current for the electrolysis.

Additionally or alternatively, the main power controller 2 and/or electrolysis controller 4 adjust the conversion of electrical power into the energy carrier of the electrolysis process at least partly to a maximum value. For instance, the maximum value may be a direct current voltage value and/or a number of activated or deactivated electrolysis processes 5 from a plurality of electrolysis processes 5 that are connected in series.

This allows that power ramps of the renewable electrical energy source 11, for instance due to rapidly changing wind conditions or solar irradiation, may be buffered by the electrolysis system 2 which improves stability of the electrical network.

Alternatively or additionally, if the electrolysis controller 4 determines that the electrolysis process 5 is capable of converting any (additional) electrical power, the electrolysis controller 4 and/or the main power controller 2 are adapted to send the indicator value 7 to the generator controller 12 via the communication network 6 which the generator controller 12 is connected to. The generator controller 12 is adapted not to reduce the production of electrical power by the renewable electrical energy source 11 if the indicator value 7 is indicative of the electrolysis process 5 being capable of converting any (additional) electrical power and/or adapted to reduce the production of electrical power if the indicator value 7 is indicative of the electrolysis process 5 not being capable of converting any (additional) electrical power. The generator controller 12 may be adapted to reduce the production of electrical power by means of a breaking chopper and/or a crowbar circuit and/or by a droop speed control, for instance.

Additionally, the indicator value 7 comprises or may be by a tolerance parameter 8 indicative of the amount of (additional) electrical power the electrolysis process 5 is capable of converting. The tolerance parameter is determined by the electrolysis controller 4, for instance based on a comparison between a current direct current voltage value and a maximum voltage value and/or based on a comparison of pressure and/or heat values of the chemical input and/or energy carrier output. The tolerance parameter 8 is transmitted by the electrolysis controller 4 and/or the main power controller 2 to the generator controller 12 via the communication network 6. The generator controller 12 is adapted to reduce the production of electrical power if the tolerance parameter 8 reaches a first threshold value whereas the generator controller 11 is adapted not to reduce the production of electrical power if the tolerance parameter 8 reaches a second threshold value.

The electrolysis system 1 is thus adapted to act as a temporary consumer when the renewable electrical energy source 11 is to produce a surplus electrical power. Further, the energy carrier produced by the electrolysis system 1 may be converted into electrical power later, for instance by means of a fuel cell and/or a gas power station.

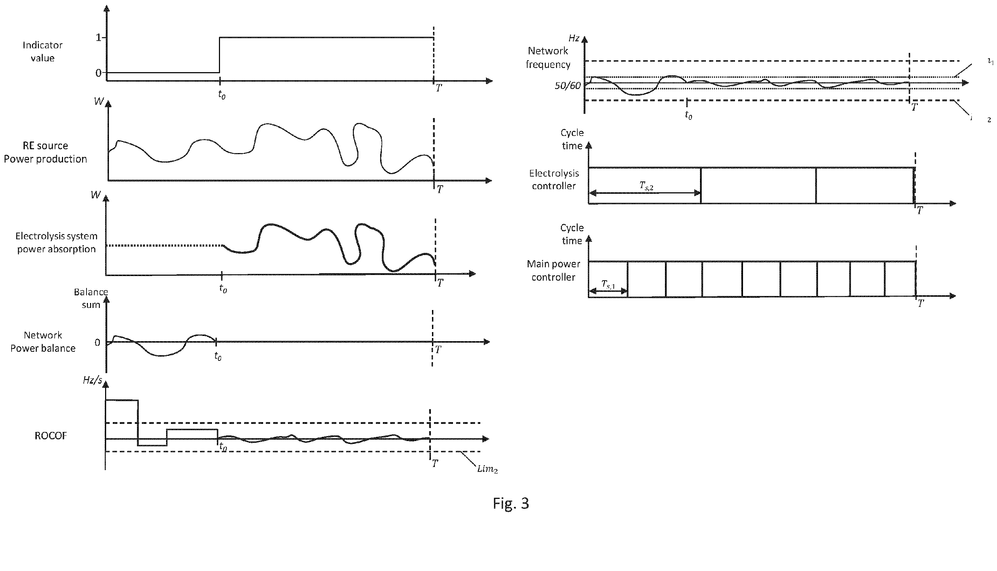

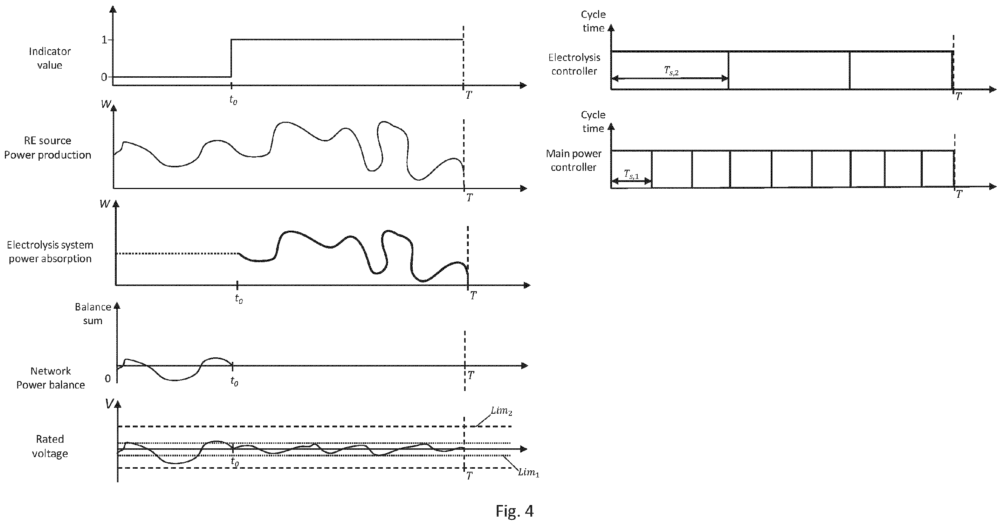

As a result, the disturbing effects of the renewable electrical energy source 11 to the network stability of the electrical network 4 due to the variations of environmental conditions are reduced as depicted in Figure 3 for an alternating current electrical network 9 and in Figure 4 for a direct current electrical network 9.

Figure 3 shows the effects of the energy balancing system 1 to the network frequency of the electrical network 9 over the time interval *T* from Figure 1 in an alternating current network. The difference between the energy balancing system of Figure 1 and the energy balancing system of Figure 3 is that the indicator value 7 indicative of the electrolysis process 6 being capable of converting any (additional) electrical power is transmitted from the electrolysis controller 4 to the main power controller 2 at the switching point *t*₀ during the time interval *T* as depicted in the first chart on the left in Figure 3. For example, when the indicator value reaches the value "1", the indicator value 7 may be indicative of the electrolysis process 5 being capable of converting any (additional) electrical power whereas a value of "0" of the indicator value 7 may indicate that the electrolysis process 5 is not capable of converting any (additional) electrical power.

During the time interval *T*, the renewable electrical energy source (RE source) 11 continues to produce electrical power in an unpredictable and stochastic manner with variations in production levels as depicted in the second chart on the left in Figure 3.

The third chart on the left in Figure 3 shows the absorption of electrical power by the electrolysis system 1 which remains at a constant level or at zero. The absorption of electrical power is controlled by the main power controller 2. At the switching point *t*₀, the indicator value 7 indicating that the electrolysis process 5 is capable of converting any (additional) electrical power is received by the main power controller 2 as a software-based variable. This triggers the main power controller 2 to overwrite the commands of the electrolysis controller 4 and to adjust the electrical power input of the electrolysis process 5 to the electrical power received or absorbed via the electrical terminal 3 of the electrolysis system 1. This leads to the electrolysis process 5 converting the electrical power produced by the renewable electrical energy source 11 in the same variations as the production of electrical power by the renewable electrical energy source 11. This causes an equalization of the production of electrical power by the renewable electrical energy source 11 and the consumption of electrical power by the electrolysis system 1 which leads to a balanced network 9 as depicted in the fourth chart on the left in Figure 3. Further, this leads to a reduction of the rate of change of the frequency remaining inside the second limit *Lim*₂ as depicted in the fifth chart on the left and the network frequency remaining inside the first limit *Lim*₁ as depicted in the first chart on the right in Figure 3. Thus, the electrical network has become more stable since the switching point *t*₀*.*

Further, due to using the software-based indicator value 7 which is transmitted between the electrolysis controller 4 and the main power controller 2 and optionally the generator controller 12, a modification of hardware architecture is not required as depicted in the second and third chart on the right in Figure 3. Here, the exchange of the indicator value between the electrolysis controller and the main power controller allows different cycle times *T*_{*s*,1} and *T*_{*s*,2} which allows a retro-fit application of said energy balancing system 1 in already existing systems.

Figure 4 shows the effects of the energy balancing system 1 to the network voltage of the electrical network 9 over the time interval *T* in a direct current network wherein the network voltage is an indicator for network stability. The first chart on the left in Figure 4 depicts the change of the indicator value at the switching point *t*₀ wherein the value "1" may indicate that the electrolysis process 5 is capable of converting any (additional) electrical energy. This triggers the power controller 2 to overwrite the commands of the electrolysis controller 4 and to adjust the electrical power which is to be converted into the energy carrier by the electrolysis process 5 corresponding to the electrical power absorbed by the electrolysis system 1 via the electrical terminal 3 from the renewable electrical energy source 11 and/or from the electrical network 9.

The second chart on the left in Figure 4 depicts the unpredictable and stochastic production of electrical power over the time interval *T* wherein the electrical power is provided as a direct current by the renewable electrical energy source 11. In a direct current network 9, the rated network voltage may vary in the same manner as the network frequency in an alternating current network 9 due to the varying environmental conditions of the renewable electrical energy source 11.

The rated voltage value which may thus vary within the certain limits *Lim*₁ and *Lim*₂ for the network 9 to remain stable. Here, *Lim*₁ depicts a deadband limit whereas *Lim*₂ may be a threshold limit for actively balancing the electrical network 9 by adjusting production and/or the consumption of electrical power in order to keep the electrical network 9 in a stable state. As can be seen from the fifth chart on the left, the rated voltage remains within the deadband limit *Lim*₁ starting from the switching point *t*₀ due to the balancing of production and absorption of electrical power by the electrolysis system 1.

The third chart on the left shows the absorption of electrical power by the electrolysis system 1 starting from the switching point *t*₀ which corresponds to the electrical power produced by the renewable electrical energy source. The electrical network is balanced starting from the switching point *t*₀, where the amount of electrical power produced corresponds to the amount of electrical power absorbed by the electrolysis system 1 as depicted in the fourth chart on the left in Figure 4.

With the indicator value 7 being set to "1" and with the electrolysis system 1 absorbing the additional electrical power produced by the renewable electrical energy source 11, the voltage fluctuations of the renewable electrical energy source 11 remain within the first limit *Lim*₁ that does not require active network balancing measures starting from the switching point *t*₀ as depicted in the fifth chart on the left of Figure 4.

Further, the first and second chart on the right in Figure 4 depict the cycle times of the main power controller *T*_{*s*,1} and of the electrolysis controller *T*_{*s*,2} which do not need to match in order to balance the production and absorption of electrical power. This is overcome by means of the indicator value 7 which allows that the electrical power input of the electrolysis process 5 is directly provided by the main power controller 2.

Thus, said energy balancing system 10 may operate in an alternating current and/or in a direct current network 9.

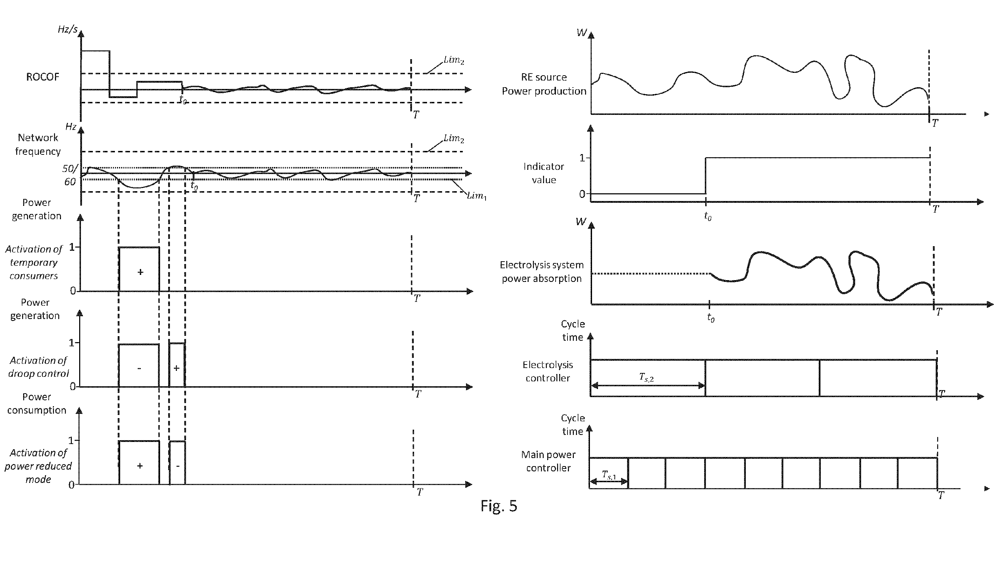

Figure 5 shows an application of said energy balancing system 1 along with droop controls of the generator controller 12 in an alternating current electrical network 4. Due to changing environmental conditions such as wind gusts or suddenly increasing solar irradiation, production of electrical power by the renewable electrical energy source 11 may cause an increased rate of change of frequency and a varying network frequency in an alternating current electrical network as depicted in the first and second chart on the left in Figure 5.

If the network frequency goes below the first limit *Lim*₁ from the reference value of 50*Hz* or 60*Hz* for instance, a temporary consumer such as a battery or an electrolysis system may be activated to reduce a consumption of electrical power as depicted in the third chart on the left of Figure 5. However, droop control for controlling active and/or reactive power of the renewable electrical energy source 11, may be deactivated as long as the network frequency is below the reference value. This may be due to the fact that the production of electrical power by the renewable electrical energy source 11 may only be slowed down and not accelerated. The production of electrical power thus remains stochastic und unpredictable wit variations over the time interval *T* as depicted in the first chart on the right of Figure 5.

However, as to those consumers which are not adapted to change to a mode of producing electrical energy, those consumers may enter a power reduced mode in order to decrease the consumption of electrical power as depicted in the fifth chart on the left in Figure 5.

In the contrary case wherein the network frequency is above the reference value as depicted in the second chart on the left, temporary consumers as depicted in the third chart on the left may be deactivated, whereas droop speed control may be activated based on common power reduction algorithms as shown in the fourth chart on the left. Further, consumers may exit a power reduced mode as depicted in the fifth chart on the left.

Said measures may allow the network frequency to remain inside the limit *Lim*₂ around the reference value for the electrical network 9 to remain stable.

If the electrolysis system 1 is capable of absorbing any (additional) electrical power or a certain amount of electrical power, the electrolysis controller 4 transmits the indicator value 7 indicative of the electrolysis process 5 being capable of converting any (additional) electrical power to the main power controller 2 via the communication network 6 which allows the main power controller 2 to overwrite the commands of the electrolysis controller 4 and to adjust the amount of electrical power converted by the electrolysis process 5 to the amount of electrical power produced by the renewable electrical energy source 11 as long as the electrolysis process 5 is capable of absorbing any (additional) electrical energy. This is shown in the second and third chart on the right of Figure 5. This causes the network frequency to remain within the first limit *Lim*₁ or deadband limit around the reference value.

Further, the use of the indicator value 7 indicates whether the electrolysis process 5 is capable of converting any additional electrical power or not as a solely software-based solution which allows different cycle times *T*_{*s*,1} and *T*_{*s*,2} of the electrolysis controller 4 and the main power controller 2 as shown in the fourth and fifth chart on the right in Figure 5. So, a change of a hardware architecture is not required.

Additionally or alternatively, the indicator value 7 is transmitted by the electrolysis controller 4 and/or the main power controller 2 to the generator controller 12 at the switching point *t*₀. The generator controller is configured not to decrease or not to slow down the production of electrical power if the indicator value 7 is indicative of the electrolysis process 5 being capable of converting any (additional) electrical power. The generator controller 12 is also configured to slow down or decrease the production of electrical power of the renewable electrical energy source 11, for instance by activating common power derating algorithms such as a droop control, if the indicator value 7 is indicative of the electrolysis process 5 being not capable of converting any (additional) electrical power.

Additionally or alternatively, a tolerance parameter 8 indicating the amount of (additional) electrical power the electrolysis process 5 is capable of converting is transmitted to the generator controller 12 from the main power controller 2 and/or from the electrolysis controller 4 via the communication network 6. The generator controller 12 is configured to decrease the production of electrical power if the tolerance parameter 8 reaches a first threshold value and not to decrease the production of electrical power if the tolerance parameter 8 reaches a second threshold value. The generator controller 12 is configured decrease the production of electrical power by activating common power reduction algorithms, such as droop control for instance.

Additionally, further network balancing measures may be activated such as activation or deactivation of electrical consumers to provide an additional mechanism for providing a network stability as depicted in the third chart on the left in Figure 5.

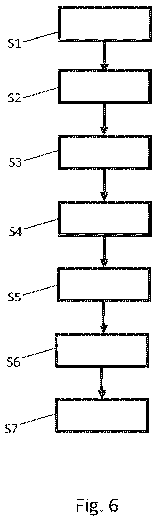

Figure 6 depicts a method for balancing an electrical power in an electrical network 9 that is electrically connected to a renewable electrical energy source 11 and to an electrolysis system 1, wherein a production of electrical power by the renewable electrical energy source 11 is controlled by a generator controller 12 and an absorption of electrical power of the electrolysis system 1 is controlled by main power controller 2 wherein an electrolysis process 5 is controlled by an electrolysis controller 4**.**

Figure 6 depicts a method for balancing an electrical power in an electrical network that is electrically connected to a renewable electrical energy source 11 and to an electrolysis system 1, wherein a production of electrical power by the electrical energy source 11 is controlled by a generator controller 12 and wherein an absorption of electrical power of the electrolysis system 1 received from the electrical energy source 11, particularly via the electrical network 9, is controlled by a main power controller 2 and wherein a conversion of electrical power into an energy carrier by an electrolysis process 5 of the electrolysis system 1 is controlled by an electrolysis controller 4.

In the first step S1, the electrolysis controller 4 determines a capacity of the electrolysis process 5 of converting any (additional) electrical power into the energy carrier and transmits an indicator value 7 indicative of whether the electrolysis process 5 is capable or not capable of converting any (additional) electrical power to the main power controller 2 of the electrolysis system 1 via the communication network 6 that connects the electrolysis controller 4 and the main power controller 2.

In the second step S2, the main power controller 2 adjusts an electrical power input of the electrolysis process 5 instead of the electrolysis controller 4 at least partly to the electrical power absorbed from the electrical energy source 11 if the indicator value 7 is indicative of the electrolysis process 5 being capable of converting any (additional) electrical power.

Additionally or alternatively, the main power controller 2 and/or the electrolysis controller 4 adjust the conversion of electrical power of the electrolysis process 5 at least partly to a maximum level if the indicator value 7 is indicative of the electrolysis process 5 being capable of converting any (additional) electrical power.

In the third step S3, the main power controller 2 and/or the electrolysis controller 4 transmit the indicator value 7 to the generator controller 12 via the communication network 6 that is connecting the generator controller 12 to the main power controller 2 and/or to the electrolysis controller 4 of the electrolysis system.

In the fourth step S4, the generator controller 12 reduces the production of electrical power of the electrical energy source 11 if the indicator value 7 is indicative of the electrolysis process 5 being not capable of converting any (additional) electrical power, particularly by means of a breaking chopper and/or a crowbar circuit and/or a droop speed control.

Additionally or alternatively, the generator controller 12 does not reduce the production of electrical power of the electrical energy source 11 inf the indicator value 7 is indicative of the electrolysis process 5 being capable of converting any (additional) electrical power.

Additionally or alternatively to the steps S1-S4, the steps S5-S7 may be conducted, particularly before and/or after the steps S1-S5. For instance, the steps S1-S4 may be conducted in an island configuration 13 whereas the steps S5-S7 may additionally be conducted in a network configuration 14.

In the fifth step S5, the generator controller 12 and/or the main power controller 2 measure a reference value of the electrical network 9, particularly a network frequency and/or a network voltage.

In the sixth step S6, the generator controller 12 and/or the main power controller 2 compare the reference value with a threshold value.

In the seventh step S7, the generator controller 12 adjusts the production of electrical power of the electrical energy source 11 and/or the main power controller 2 adjust the absorption of electrical power of the electrolysis system 1 with respect to the reference value, particularly if the indicator value 7 is indicative of the electrolysis process 5 being capable of converting any (additional) electrical power.

For the generator controller 12, adjusting may mean decreasing or not decreasing the production of electrical power whereas for the main power controller 2, adjusting may mean decreasing or increasing the absorption of electrical power via the electrical terminal 3 of the electrolysis system 1.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention as recited in the appended claims.

## Claims

1. Electrolysis system (1) for energy harvesting comprising a main power controller (2) that is adapted to control an absorption of electrical power received via an electrical terminal (3) and further comprising an electrolysis controller (4) adapted to control a conversion of the electrical power into an energy carrier by means of an electrolysis process (5), wherein the main power controller (2) and the electrolysis controller (4) are connected via a communication network (6),
wherein
the electrolysis controller (4) is adapted to transmit an indicator value (7) indicative of the electrolysis process (5) being capable or not capable of converting any additional electrical power to the main power controller (2) via the communication network (6),
**characterized in that**
the main power controller (2) is adapted to adjust an electrical power input of the electrolysis process (5) instead of the electrolysis controller (4) at least partly to the electrical power absorbed via the electrical terminal (3) if the indicator value (7) is indicative of the electrolysis process (5) being capable of converting any additional electrical power.

2. Electrolysis system (1) according to claim 1, **characterized in that** the electrolysis controller (4) and/or the main power controller (2) are adapted to adjust the conversion of electrical power into the energy carrier of the electrolysis process (5) at least partly to a maximum level if the indicator value (7) is indicative of the electrolysis system (1) being capable of converting any additional electrical power.

3. Electrolysis system (1) according to one of the preceding claims, **characterized in that** the indicator value (7) comprises a tolerance parameter (8) indicative of an amount of the additional electrical power the electrolysis process (5) is capable of converting.

4. Electrolysis system (1) according to one of the preceding claims, **characterized in that** the main power controller (2) is adapted to measure a reference value of an electrical network (9) that is connected to the electrical terminal (3) wherein the main power controller (2) is adapted to adjust the absorption of electrical power received via the electrical terminal (3) based on the reference value.

5. Energy balancing system (10) comprising the electrolysis system (1) of one of the preceding claims and an electrical energy source (11) wherein the electrolysis system (1) and the electrical energy source (11) are electrically connected.

6. Energy balancing system (10) according to claim 5, **characterized in that** a production of electrical power of the electrical energy source (11) is controlled by a generator controller (12), wherein the generator controller (12) is connected to the communication network (6), wherein the main power controller (2) and/or the electrolysis controller (4) of the electrolysis system (1) is adapted to transmit the indicator value (7) indicative of the electrolysis process (5) being capable or not capable of converting any additional electrical power to the generator controller (12) via the communication network (6).

7. Energy balancing system (10) according to claim 5 or 6, **characterized in that** the generator controller (12) is adapted to reduce the production of electrical power of the electrical energy source (11) if the indicator value (7) is indicative of the electrolysis process (5) being not capable of converting any additional electrical power.

8. Method for balancing an electrical power in an electrical network (9) that is electrically connected to an electrical energy source (11) and to an electrolysis system, wherein a production of electrical power by the electrical energy source (11) is controlled by a generator controller (12) and wherein an absorption of electrical power of the electrolysis system (1) received from the electrical energy source (11) is controlled by a main power controller (2) and wherein a conversion of electrical power into an energy carrier by an electrolysis process (5) of the electrolysis system (1) is controlled by an electrolysis controller (4), comprising the steps of:
- Determining by means of the electrolysis controller (4) a capacity of the electrolysis process (5) of converting any additional electrical power into the energy carrier and transmitting an indicator value (7) indicative of whether the electrolysis process (5) is capable or not capable of converting any additional electrical power to the main power controller (2) of the electrolysis system (1) via a communication network (6) connecting the electrolysis controller (4) and the main power controller (2);
the method being **characterized by** further comprising the step of:
- Adjusting by the main power controller (2) an electrical power input of the electrolysis process (5) instead of the electrolysis controller (4) at least partly to the electrical power absorbed from the electrical energy source (11) if the indicator value (7) is indicative of the electrolysis process (5) being capable of converting any additional electrical power.

9. Method according to claim 8, further comprising the step of:
- Adjusting by means of the main power controller (2) and/or the electrolysis controller (4) the conversion of electrical power of the electrolysis process (5) at least partly to a maximum level if the indicator value (7) is indicative of the electrolysis process (5) being capable of converting any additional electrical power.

10. Method according to claim 8 or 9, further comprising the steps of:
- Transmitting by the main power controller (2) and/or the electrolysis controller (4) the indicator value (7) to the generator controller (12) via the communication network (6) that is connecting the generator controller (12) to the main power controller (2) and/or to the electrolysis controller (4) of the electrolysis system;
- Reducing by means of the generator controller (12) the production of electrical power of the electrical energy source (11) if the indicator value (7) is indicative of the electrolysis process (5) being not capable of converting any additional electrical power.

11. Method according to claims 8 to 10, further comprising the steps of:
- Measuring by means of the generator controller (12) and/or the main power controller (2) a reference value of the electrical network (9);
- Comparing by the generator controller (12) and/or the main power controller (2) the reference value with a threshold value;
- Adjusting by the generator controller (12) the production of electrical power of the electrical energy source (11) and/or adjusting by the main power controller (2) the absorption of electrical power of the electrolysis system (1) with respect to the reference value.

12. A computer program comprising instructions which, when the program is executed by a main power controller (2) and/or an electrolysis controller (4) cause the main power controller (2) and/or the electrolysis controller (4) to carry out the steps of the method of claims 8 to 11.

13. Controller comprising a computer-readable storage medium having stored thereon the computer program of claim 12.

14. Electrical energy source comprising the controller of claim 13.

## Patentansprüche

1. Elektrolysesystem (1) zur Energiegewinnung, umfassend eine Hauptleistungssteuerung (2), die dazu ausgelegt ist, eine Aufnahme von elektrischer Leistung zu steuern, die über einen elektrischen Anschluss (3) empfangen wird, und ferner umfassend eine Elektrolysesteuerung (4), die dazu ausgelegt ist, eine Umwandlung der elektrischen Leistung in einen Energieträger mittels eines Elektrolyseprozesses (5) zu steuern, wobei die Hauptleistungssteuerung (2) und die Elektrolysesteuerung (4) über ein Kommunikationsnetz (6) verbunden sind,
wobei
die Elektrolysesteuerung (4) dazu ausgelegt ist, einen Indikatorwert (7), der angibt, dass der Elektrolyseprozess (5) imstande ist oder nicht imstande ist, zusätzliche elektrische Leistung umzuwandeln, an die Hauptleistungssteuerung (2) über das Kommunikationsnetz (6) zu übertragen,
**dadurch gekennzeichnet, dass**
die Hauptleistungssteuerung (2) dazu ausgelegt ist, einen elektrischen Leistungseingang des Elektrolyseprozesses (5) anstelle der Elektrolysesteuerung (4) zumindest teilweise auf die über den elektrischen Anschluss (3) aufgenommene elektrische Leistung einzustellen, wenn der Indikatorwert (7) angibt, dass der Elektrolyseprozess (5) imstande ist, zusätzliche elektrische Leistung umzuwandeln.

2. Elektrolysesystem (1) nach Anspruch 1, **dadurch gekennzeichnet, dass** die Elektrolysesteuerung (4) und/oder die Hauptleistungssteuerung (2) dazu ausgelegt sind, die Umwandlung von elektrischer Leistung in den Energieträger des Elektrolyseprozesses (5) zumindest teilweise auf einen maximalen Spiegel einzustellen, wenn der Indikatorwert (7) angibt, dass das Elektrolysesystem (1) imstande ist, zusätzliche elektrische Leistung umzuwandeln.

3. Elektrolysesystem (1) nach einem der vorhergehenden Ansprüche**, dadurch gekennzeichnet, dass** der Indikatorwert (7) einen Toleranzparameter (8) umfasst, der eine Menge der zusätzlichen elektrischen Leistung angibt, die der Elektrolyseprozess (5) imstande ist, umzuwandeln.

4. Elektrolysesystem (1) nach einem der vorhergehenden Ansprüche, **dadurch gekennzeichnet, dass** die Hauptleistungssteuerung (2) dazu ausgelegt ist, einen Referenzwert eines elektrischen Netzes (9) zu messen, das mit dem elektrischen Anschluss (3) verbunden ist, wobei die Hauptleistungssteuerung (2) dazu ausgelegt ist, die Aufnahme von über den elektrischen Anschluss (3) empfangener elektrischer Leistung auf Grundlage des Referenzwerts einzustellen.

5. Energieausgleichssystem (10), umfassend das Elektrolysesystem (1) nach einem der vorhergehenden Ansprüche und eine elektrische Energiequelle (11), wobei das Elektrolysesystem (1) und die elektrische Energiequelle (11) elektrisch verbunden sind.

6. Energieausgleichssystem (10) nach Anspruch 5, **dadurch gekennzeichnet, dass** eine Erzeugung von elektrischer Leistung der elektrischen Energiequelle (11) durch eine Generatorsteuerung (12) gesteuert wird, wobei die Generatorsteuerung (12) mit dem Kommunikationsnetz (6) verbunden ist, wobei die Hauptleistungssteuerung (2) und/oder die Elektrolysesteuerung (4) des Elektrolysesystems (1) dazu ausgelegt ist/sind, den Indikatorwert (7), der angibt, dass der Elektrolyseprozess (5) imstande ist oder nicht imstande ist, zusätzliche elektrische Leistung umzuwandeln, an die Generatorsteuerung (12) über das Kommunikationsnetz (6) zu übertragen.

7. Energieausgleichssystem (10) nach Anspruch 5 oder 6, **dadurch gekennzeichnet, dass** die Generatorsteuerung (12) dazu ausgelegt ist, die Erzeugung von elektrischer Leistung der elektrischen Energiequelle (11) zu verringern, wenn der Indikatorwert (7) angibt, dass der Elektrolyseprozess (5) nicht imstande ist, zusätzliche elektrische Leistung umzuwandeln.

8. Verfahren zum Ausgleichen einer elektrischen Leistung in einem elektrischen Netz (9), das elektrisch mit einer elektrischen Energiequelle (11) und mit einem Elektrolysesystem verbunden ist, wobei eine Erzeugung von elektrischer Leistung durch die elektrische Energiequelle (11) durch eine Generatorsteuerung (12) gesteuert wird und wobei eine Aufnahme von elektrischer Leistung des Elektrolysesystems (1), die von der elektrischen Energiequelle (11) empfangen wird, durch eine Hauptleistungssteuerung (2) gesteuert wird und wobei eine Umwandlung von elektrischer Leistung in einen Energieträger durch einen Elektrolyseprozess (5) des Elektrolysesystems (1) durch eine Elektrolysesteuerung (4) gesteuert wird, umfassend die folgenden Schritte:
- Bestimmen, mittels der Elektrolysesteuerung (4), einer Kapazität des Elektrolyseprozesses (5) zum Umwandeln von zusätzlicher elektrischer Leistung in den Energieträger und Übertragen eines Indikatorwerts (7), der angibt, ob der Elektrolyseprozess (5) imstande ist oder nicht imstande ist, zusätzliche elektrische Leistung umzuwandeln, an die Hauptleistungssteuerung (2) des Elektrolysesystems (1) über ein Kommunikationsnetz (6), das die Elektrolysesteuerung (4) und die Hauptleistungssteuerung (2) verbindet;
wobei das Verfahren **dadurch gekennzeichnet ist, dass** es ferner den folgenden Schritt umfasst:
- Einstellen, durch die Hauptleistungssteuerung (2), eines elektrischen Leistungseingangs des Elektrolyseprozesses (5) anstelle der Elektrolysesteuerung (4) zumindest teilweise auf die von der elektrischen Energiequelle (11) aufgenommene elektrische Leistung, wenn der Indikatorwert (7) angibt, dass der Elektrolyseprozess (5) imstande ist, zusätzliche elektrische Leistung umzuwandeln.

9. Verfahren nach Anspruch 8, ferner umfassend den folgenden Schritt:
- Einstellen, mittels der Hauptleistungssteuerung (2) und/oder der Elektrolysesteuerung (4), der Umwandlung von elektrischer Leistung des Elektrolyseprozesses (5) zumindest teilweise auf einen maximalen Spiegel, wenn der Indikatorwert (7) angibt, dass der Elektrolyseprozess (5) imstande ist, zusätzliche elektrische Leistung umzuwandeln.

10. Verfahren nach Anspruch 8 oder 9, ferner umfassend die folgenden Schritte:
- Übertragen, durch die Hauptleistungssteuerung (2) und/oder die Elektrolysesteuerung (4), des Indikatorwerts (7) an die Generatorsteuerung (12) über das Kommunikationsnetz (6), das die Generatorsteuerung (12) mit der Hauptleistungssteuerung (2) und/oder mit der Elektrolysesteuerung (4) des Elektrolysesystems verbindet;
- Verringern, mittels der Generatorsteuerung (12), der Erzeugung von elektrischer Leistung der elektrischen Energiequelle (11), wenn der Indikatorwert (7) angibt, dass der Elektrolyseprozess (5) nicht imstande ist, zusätzliche elektrische Leistung umzuwandeln.

11. Verfahren nach den Ansprüchen 8 bis 10, ferner umfassend die folgenden Schritte:
- Messen, mittels der Generatorsteuerung (12) und/oder der Hauptleistungssteuerung (2), eines Referenzwerts des elektrischen Netzes (9);
- Vergleichen, durch die Generatorsteuerung (12) und/oder die Hauptleistungssteuerung (2), des Referenzwerts mit einem Schwellenwert;
- Einstellen, durch die Generatorsteuerung (12), der Erzeugung von elektrischer Leistung der elektrischen Energiequelle (11) und/oder Einstellen, durch die Hauptleistungssteuerung (2), der Aufnahme von elektrischer Leistung des Elektrolysesystems (1) in Bezug auf den Referenzwert.

12. Computerprogramm, umfassend Anweisungen, die bei Ausführung des Programms durch eine Hauptleistungssteuerung (2) und/oder eine Elektrolysesteuerung (4) die Hauptleistungssteuerung (2) und/oder die Elektrolysesteuerung (4) dazu veranlassen, die Schritte des Verfahrens nach den Ansprüchen 8 bis 11 durchzuführen.

13. Steuerung, umfassend ein computerlesbares Speichermedium, auf dem das Computerprogramm nach Anspruch 12 gespeichert ist.

14. Elektrische Energiequelle, umfassend die Steuerung nach Anspruch 13.

## Revendications

1. Système d'électrolyse (1) pour la collecte d'énergie, comprenant un contrôleur de puissance principal (2) qui est adapté pour commander l'absorption de puissance électrique reçue via une borne électrique (3) et comprenant en outre un contrôleur d'électrolyse (4) adapté pour commander une conversion de la puissance électrique en un vecteur énergétique au moyen d'un procédé d'électrolyse (5), dans lequel le contrôleur de puissance principal (2) et le contrôleur d'électrolyse (4) sont reliés via un réseau de communication (6),
dans lequel
le contrôleur d'électrolyse (4) est adapté pour transmettre au contrôleur de puissance principal (2), via le réseau de communication (6), une valeur d'indicateur (7) indicative de la capacité ou de l'incapacité du procédé d'électrolyse (5) à convertir toute puissance électrique supplémentaire,
**caractérisé en ce que**
le contrôleur de puissance principal (2) est adapté pour ajuster, au lieu du contrôleur d'électrolyse (4), une entrée de puissance électrique du procédé d'électrolyse (5) au moins en partie à la puissance électrique absorbée via la borne électrique (3) si la valeur d'indicateur (7) est indicative du fait que le procédé d'électrolyse (5) est capable de convertir toute puissance électrique supplémentaire.

2. Système d'électrolyse (1) selon la revendication 1, **caractérisé en ce que** le contrôleur d'électrolyse (4) et/ou le contrôleur de puissance principal (2) sont adaptés pour ajuster la conversion de puissance électrique en le vecteur énergétique du procédé d'électrolyse (5) au moins en partie à un niveau maximum si la valeur d'indicateur (7) est indicative du fait que le système d'électrolyse (1) est capable de convertir toute puissance électrique supplémentaire.

3. Système d'électrolyse (1) selon l'une des revendications précédentes, **caractérisé en ce que** la valeur d'indicateur (7) comprend un paramètre de tolérance (8) indicatif d'une quantité de la puissance électrique supplémentaire que le procédé d'électrolyse (5) est capable de convertir.

4. Système d'électrolyse (1) selon l'une des revendications précédentes, **caractérisé en ce que** le contrôleur de puissance principal (2) est adapté pour mesurer une valeur de référence d'un réseau électrique (9) qui est relié à la borne électrique (3), dans lequel le contrôleur de puissance principal (2) est adapté pour ajuster l'absorption de puissance électrique reçue via la borne électrique (3) sur la base de la valeur de référence.

5. Système d'équilibrage d'énergie (10) comprenant le système d'électrolyse (1) selon l'une des revendications précédentes et une source d'énergie électrique (11), dans lequel le système d'électrolyse (1) et la source d'énergie électrique (11) sont reliés électriquement.

6. Système d'équilibrage d'énergie (10) selon la revendication 5, **caractérisé en ce qu'**une production de puissance électrique de la source d'énergie électrique (11) est commandée par un contrôleur de générateur (12), dans lequel le contrôleur de générateur (12) est relié au réseau de communication (6), dans lequel le contrôleur de puissance principal (2) et/ou le contrôleur d'électrolyse (4) du système d'électrolyse (1) est adapté pour transmettre au contrôleur de générateur (12), via le réseau de communication (6), la valeur d'indicateur (7) indicative de la capacité ou de l'incapacité du procédé d'électrolyse (5) à convertir toute puissance électrique supplémentaire.

7. Système d'équilibrage d'énergie (10) selon la revendication 5 ou 6, **caractérisé en ce que** le contrôleur de générateur (12) est adapté pour réduire la production de puissance électrique de la source d'énergie électrique (11) si la valeur d'indicateur (7) est indicative du fait que le procédé d'électrolyse (5) n'est pas capable de convertir toute puissance électrique supplémentaire.

8. Procédé pour équilibrer une puissance électrique dans un réseau électrique (9) qui est relié électriquement à une source d'énergie électrique (11) et à un système d'électrolyse, dans lequel une production de puissance électrique par la source d'énergie électrique (11) est commandée par un contrôleur de générateur (12) et dans lequel une absorption de puissance électrique du système d'électrolyse (1) reçue de la source d'énergie électrique (11) est commandée par un contrôleur de puissance principal (2) et dans lequel une conversion de puissance électrique en un vecteur énergétique par un procédé d'électrolyse (5) du système d'électrolyse (1) est commandée par un contrôleur d'électrolyse (4), comprenant les étapes consistant à :
- déterminer au moyen du contrôleur d'électrolyse (4) une capacité du procédé d'électrolyse (5) à convertir toute puissance électrique supplémentaire en le vecteur énergétique et transmettre au contrôleur de puissance principal (2) du système d'électrolyse (1), via un réseau de communication (6) reliant le contrôleur d'électrolyse (4) et le contrôleur de puissance principal (2), une valeur d'indicateur (7) indicative de la capacité ou de l'incapacité du procédé d'électrolyse (5) à convertir toute puissance électrique supplémentaire ;
le procédé étant **caractérisé par** le fait de comprendre en outre l'étape consistant à :
- ajuster au moyen du contrôleur de puissance principal (2) une entrée de puissance électrique du procédé d'électrolyse (5) au lieu du contrôleur d'électrolyse (4) au moins en partie à la puissance électrique absorbée à partir de la source d'énergie électrique (11) si la valeur d'indicateur (7) est indicative du fait que le procédé d'électrolyse (5) est capable de convertir toute puissance électrique supplémentaire.

9. Procédé selon la revendication 8, comprenant en outre l'étape consistant à :
- ajuster au moyen du contrôleur de puissance principal (2) et/ou du contrôleur d'électrolyse (4) la conversion de puissance électrique du procédé d'électrolyse (5) au moins en partie à un niveau maximum si la valeur d'indicateur (7) est indicative du fait que le procédé d'électrolyse (5) est capable de convertir toute puissance électrique supplémentaire.

10. Procédé selon la revendication 8 ou 9, comprenant en outre les étapes consistant à :
- transmettre au moyen du contrôleur de puissance principal (2) et/ou du contrôleur d'électrolyse (4) la valeur d'indicateur (7) au contrôleur de générateur (12) via le réseau de communication (6) qui relie le contrôleur de générateur (12) au contrôleur de puissance principal (2) et/ou au contrôleur d'électrolyse (4) du système d'électrolyse ;
- réduire au moyen du contrôleur de générateur (12) la production de puissance électrique de la source d'énergie électrique (11) si la valeur d'indicateur (7) est indicative du fait que le procédé d'électrolyse (5) n'est pas capable de convertir toute puissance électrique supplémentaire.

11. Procédé selon les revendications 8 à 10, comprenant en outre les étapes consistant à :
- mesurer au moyen du contrôleur de générateur (12) et/ou du contrôleur de puissance principal (2) une valeur de référence du réseau électrique (9) ;
- comparer au moyen du contrôleur de générateur (12) et/ou du contrôleur de puissance principal (2), la valeur de référence avec une valeur seuil ;
- ajuster au moyen du contrôleur de générateur (12) la production de puissance électrique de la source d'énergie électrique (11) et/ou ajuster, par le contrôleur de puissance principal (2), l'absorption de puissance électrique du système d'électrolyse (1) par rapport à la valeur de référence.

12. Programme informatique comprenant des instructions qui, lorsque le programme est exécuté par un contrôleur de puissance principal (2) et/ou un contrôleur d'électrolyse (4), amènent le contrôleur de puissance principal (2) et/ou le contrôleur d'électrolyse (4) à réaliser les étapes du procédé selon les revendications 8 à 11.

13. Contrôleur comprenant un support de stockage lisible par ordinateur sur lequel est stocké le programme informatique selon la revendication 12.

14. Source d'énergie électrique comprenant le contrôleur selon la revendication 13.
